Europäisches Patentamt

European Patent Office

Office européen des brevets

(19)

(11) Veröffentlichungsnummer: **0 241 702**
**B1**

(12) **EUROPÄISCHE PATENTSCHRIFT**

(45) Veröffentlichungstag der Patentschrift:
27.09.89

(21) Anmeldenummer: 87103383.3

(22) Anmeldetag: 10.03.87

(51) Int. Cl.⁴: **C08K 7/14, C08K 5/34,**
C08L 77/00

ERRATUM

|  | (SEITE, SPALTE, ZEILE)<br>(PAGE, COLUMN, LINE)<br>(PAGE, COLONNE, LIGNE) |  |  |  |
|---|---|---|---|---|
| DIE TEXTSTELLE :<br>TEXT PUBLISHED :<br>LE PASSAGE SUIVANT : |  |  |  | LAUTET BERICHTIGT:<br>SHOULD READ :<br>DEVRAIT ETRE LU : |
| Melamincyanurats mit der Polyamidschmel schmelze in Ein- oder Mehrwellenextrudern | 2 | 2 | 26/27 | Melamincyanurats mit der Polyamidschmelze in Ein- oder Mehrwellenextrudern |
| daß sie 5 - 20 Gew.-% Melamin | 3 | 4 | 45 | daß 5 - 20 Gew.-% Melamin |
| 10 - 4 Gew.-% ungeschlichtete | 3 | 4 | 48 | 10 - 40 Gew.-% ungeschlichtete |

Tag der Entscheidung über die Berichtigung )
Date of decision on rectification: )  25.1.90
Date de décision portant sur modification: )

Ausgabe- und Veröffentlichungstag: )
Issue and publication date: )  21.3.90
Date d'edition et de publication: )

Patbl.Nr)  90/12
EPB no:)
Bull. no:)

Europäisches Patentamt

European Patent Office

Office européen des brevets

(11) Veröffentlichungsnummer: **0 241 702**
B1

(12) **EUROPÄISCHE PATENTSCHRIFT**

(45) Veröffentlichungstag der Patentschrift:
27.09.89

(21) Anmeldenummer: **87103383.3**

(22) Anmeldetag: **10.03.87**

(51) Int. Cl.⁴: **C08K 7/14, C08K 5/34,
C08L 77/00**

(54) Flammfeste, glasfaserverstärkte Polyamidformmassen.

(30) Priorität: **20.03.86 DE 3609341**

(43) Veröffentlichungstag der Anmeldung:
**21.10.87 Patentblatt 87/43**

(45) Bekanntmachung des Hinweises auf die Patenterteilung:
**27.09.89 Patentblatt 89/39**

(84) Benannte Vertragsstaaten:
**DE FR GB IT NL**

(56) Entgegenhaltungen:
**DD-A- 134 775
DE-A- 1 694 245
DE-A- 3 023 965**

**ENCYCLOPEDIA OF POLYMER SCIENCE AND
ENGINEERING, Band 3, 1985, Seiten 776-820, John
Wiley & Sons, New York, US; "Composites"
ENCYCLOPEDIA OF POLYMER SCIENCE AND
TECHNOLOGY, Band 12, 1970, Seiten 1-41, John Wiley &
Sons, US; "Reinforced plastics"**

(73) Patentinhaber: **BAYER AG,
D-5090 Leverkusen 1 Bayerwerk(DE)**

(72) Erfinder: **Bonten, Heinz, Dipl.-Ing., An der Heimstätte 23,
D-4150 Krefeld(DE)**
Erfinder: **Nielinger, Werner, Dr., Bärenstrasse 21,
D-4150 Krefeld(DE)**
Erfinder: **Michael, Dietrich, Dr., Deswatinesstrasse 57,
D-4150 Krefeld(DE)**
Erfinder: **Selbeck, Harald, Dr., Erftweg 73,
D-4150 Krefeld(DE)**
Erfinder: **Meyer, Rolf-Volker, Dr., Buchheimer
Strasse 23, D-4150 Krefeld(DE)**

## Beschreibung

Gegenstand der Erfindung sind mit ungeschlichteten Glasfasern verstärkte Polyamidformmassen, die mit Melamin oder Melamincyanurat flammfest ausgerüstet sind und eine hohe Glühdrahtfestigkeit aufweisen.

Brandwidrig ausgerüstete Polyamide gewinnen in jüngster Zeit zunehmend an Bedeutung. Dabei besteht ein besonderes Interesse an Produkten in hellen Farbeinstellungen für den Elektrosektor. Von den bekannten Brandschutzsystemen sind jedoch roter Phosphor und Halogenverbindungen in Kombination mit Synergisten für diesen Anwendungsbereich nicht geeignet. Halogenverbindungen setzen die elektrischen Eigenschaften, wie Kriechstromfestigkeit und Durchschlagfestigkeit, herab, roter Phosphor kommt wegen seiner dunklen Eigenfarbe nicht in Betracht.

Zur Herstellung farbheller, unverstärkter, flammwidrig eingestellter Polyamide wird in der DAS 1 694 254 der Zusatz von Melamin empfohlen. Bei glasfaserverstärkten Polyamiden ist Melamin und Melaminsalze wie z.B. Melamincyanurat weniger wirksam, die Glühdrahtfestigkeit dieser Produkte ist niedrig.

Nach einem Vorschlag gemäß der deutschen Patentschrift 1 803 606 kann die Melaminmenge zwar durch synergistisch wirkende Halogenverbindungen reduziert werden. Da aber durch die Halogenverbindungen die Kriechstromfestigkeit der Polyamidteile reduziert wird, ist ein Einsatz im Elektrosektor bei Spannung führenden Teilen weitgehend eingeschränkt.

Überraschenderweise wurde nun gefunden, daß die Flammfestigkeit und die Glühdrahtfestigkeit glasfaserverstärkter und mit Melamin oder Melamincyanurat brandwidrig ausgerüsteter Polyamide deutlich verbessert werden kann, wenn man anstelle der in der Praxis üblicherweise mit einer Schlichte versehenen Glasfasern ungeschlichtete Fasern verwendet.

Gegenstand der Erfindung sind daher flammfest ausgerüstete, verstärkte Polyamidformmassen, die 3 - 25, vorzugsweise 5 - 20 Gew.-% Melamin oder Melamincyanurat und 5 - 45, vorzugsweise 10 - 40 Gew.-% ungeschlichtete Glasfasern enthalten.

Dabei wird Melamin besonders bevorzugt in Mengen von 10 - 15 Gew.-% und Melamincyanurat in Mengen von 5 - 10 Gew.-% eingesetzt.

Die erfindungsgemäßen Polyamidformmassen zeichnen sich gegenüber den mit geschlichteten Glasfasern verstärkten Polyamiden durch kürzere Nachbrennzeiten aus und durch eine hohe Glühdrahtfestigkeit, die bei elektrische Spannung führenden Formkörpern besonders wichtig ist.

Zur Herstellung der erfindungsgemäßen Formmassen eignen sich besonders aliphatische Polyamide, die nach bekannten Polykondensationsverfahren aus Diaminen und Dicarbonsäuren oder Lactamen mit wenigstens 7 Ringgliedern oder den entsprechenden ω-Aminocarbonsäuren hergestellt werden. Als Ausgangsprodukte kommen beispielsweise Dicarbonsäuren wie Adipinsäure, 2,2,4- und 2,4,4-Trimethylhexamethylendiamin, Azelainsäure, Sebazinsäure, Decandicarbonsäure und Diamine wie 1,4-Diaminobutan, 1,6-Diaminohexan, 2,2,4- und 2,4,4-Trimethylhexamethylendiamin, die isomeren Diaminodicyclohexylmethane, Diaminodicyclohexylpropane, Isophorondiamin, Bis-aminomethyl-cyclohexan in Betracht, ferner Aminocarbonsäuren wie ε-Aminocapronsäure, ω-Aminoundecansäure, ω-Aminolaurinsäure oder die entsprechenden Lactame. Selbstverständlich sind Copolyamide aus mehreren der genannten Monomeren eingeschlossen. Die Copolyamide können auch Monomere mit aromatischen Ringsystemen wie Isophthalsäure, Terephthalsäure, oder die isomeren Xylylendiamine enthalten. Besonders geeignet sind Polyamid-6,6 und Polyamid 6.

Als Glasfasern kommen ungeschlichtete vorzugsweise gemahlene Glasfasern in Betracht, deren Durchmesser 6 - 18, vorzugsweise 9 - 16 µm betragen soll. Die Fasern werden vorzugsweise aus E-Glas, einem alkaliarmen, wasserbeständigen Borsilikatglas mit weniger als 1 % Alkalioxid ($Na_2O$ und $K_2O$) hergestellt.

Die Herstellung der erfindungsgemäßen Polyamidformmassen erfolgt durch Mischen der ungeschlichteten Glasfasern und des Melamins oder Melamincyanurats mit der Polyamidschmel schmelze in Ein- oder Mehrwellenextrudern herkömmlicher Bauart, wobei Glasfasern und Melamin oder Melamincyanurat gleichzeitig oder nacheinander zur Polyamidschmelze gegeben werden können. Es ist auch möglich, die Additive getrennt einzuarbeiten, z.B. das Melamin oder das Melamincyanurat in die Schmelze aus dem verstärkten Polyamid. Es ist außerdem möglich, das Melamin oder Melamincyanurat als Konzentrat einzusetzen und auch eine Granulatmischung aus dem Konzentrat und glasfaserverstärktem Polyamid in einer Spritzgußmaschine zu verarbeiten.

Die brandwidrig ausgerüsteten, erfindungsgemäßen Polyamidformmassen können zusätzlich mit den üblichen Additiven wie Entformungsmittel, Fließmittel, Stabilisatoren, Farbstoffe, Pigmente und Füllstoffe in den üblichen Mengen ausgerüstet werden. Die bekannten Haftvermittler, vorzugsweise Silanverbindungen, wie sie in DOS 1 965 434 beschrieben sind, zur Verbesserung der mechanischen Eigenschaften sind unkritisch bezüglich des Brandverhaltens; sie werden zweckmäßig vor der Verarbeitung auf das Granulat gesprüht. Besonders bevorzugt kann γ-Aminopropyltriethoxysilan als Haftvermittler verwendet werden.

Die erfindungsgemäßen Polyamidformmassen eignen sich zur Herstellung von Formkörpern für den technischen Bereich, speziell für den Elektrosektor. Besonders vorteilhaft werden sie dort eingesetzt, wo sie mit Spannung führenden Teilen in Berührung kommen. Als Beispiele seien Steckverbinder, Reihenklemmen oder Luftschütze genannt.

### Beispiel 1

55 Gew.-T1. Polyamid 66 mit einer relativen Viskosität von 3,0, gemessen an einer 1 %igen Lösung in m-Kresol bei 25°C in einem Ubbelohde-Viskosimeter, 30Gew.-T1. Kurzglasfaser und 15 Gew.-Teile Melamin werden auf Doppelwellenextruder vom Typ ZSK 53 von Werner und Pfleiderer bei ca. 285 - 295°C gemischt. Bei der Kurzglasfaser handelt es sich um eine gemahlene, ungeschlichtete Faser aus E-Glas mit einem Faserdurchmesser von ca. 10 μm.

Der Brandtest nach UL Subj. 94 ergibt VO für Probekörper mit einer Wandstärke von 3,2 1,6 und 0,8 mm.

Im Glühdrahttest nach IEC 695-2-1 werden bei 1, 2 und 3 mm Wandstärke 960°C erreicht.

## Beispiel 2

Wie in Beispiel 1 werden 62,5 Gew.-T1. Polyamid 66, 30 Gew.-T1. Kurzglasfaser und 7,5 Gew.-T1. Melamincyanurat auf einer ZSK 53 compoundiert.

Der Brandtest nach UL, Subj. 94, ergibt V 2 bei Probekörpern mit Wandstärke von 3,2, 1,6 und 0,8 mm.

Der Glühdrahttest nach IEC 695-2-1 wird mit 960°C bei 1, 2 und 3 mm Wandstärke bestanden.

## Vergleichsbeispiel 3

Wie in Beispiel 1 werden 70 Gew.-T1. Polyamid 66 und 30 Gew.-T1. ungeschlichtete Kurzglasfaser auf einer ZSK 53 compoundiert.

Im Brandtest nach UL, Subj. 94, wird V 2 bei 3,2 mm und HB bei 1,6 und 0,8 mm Wandstärke gemessen.

Der Glühdrahttest ergibt 850°C bei 1 mm und 960°C bei 2 und 3 mm Wandstärke.

## Vergleichsbeispiel 4

Wie in Beispiel 1 werden 60 Gew.-T1. Polyamid 66, 30 Gew.-T1. beschlichtete Glasfasern mit einem Durchmesser von ca. 10 μm and 10 Gew.-T1. Melamincyanurat auf einem Doppelwellenextruder (ZSK 32) compoundiert.

Der Brandtest nach UL, Subj. 94, ergibt V 2 bei 3,2 1,6 und 0,8 mm Wandstärke.

Im Glühdrahttest werden bei 1 und 2 mm Schichtdicke 750°C und bei 3 mm Schichtdicke 850°C erreicht.

## Beispiel 5

65 Gew.-T1. Polyamid 66 mit einer relativen Viskosität von 3,0, gemessen an einer 1 %igen Lösung in m-Kresol bei 25°C in einem Ubbelohde-Viskosimeter, 20 Gew.-T1. Kurzglasfaser und 15 Gew.-T1. Melamin werden auf einem Doppelwellenextruder vom Typ ZSK 53 von Werner und Pfleiderer bei 280°C gemischt. Bei der Kurzglasfaser handelt es sich um eine gemahlene, ungeschlichtete Faser mit einem Faserdurchmesser von ca. 14 μm. Die Faser besteht aus E-Glas und enthält zur Verbesserung der Haftung 0,05 Gew.-% γ-Aminopropyltriethoxysilan.

Der Brandtest nach UL, Subj. 94, ergibt VO für Probekörper mit einer Wandstärke von 3,2, 1,6 und 0,8 mm.

## Beispiel 6

62,5 Gew.-T1. Polyamid 6 mit einer relativen Viskosität von 2,9, 30 Gew.-T1. einer ungeschlichteten, gemahlenen Kurzglasfaser mit einem Faserdurchmesser von 10 μm und 7,5 Gew.-T1. Melamincyanurat werden auf einem Doppelwellenextruder vom Typ ZSK 83 von Werner und Pfleiderer bei ca. 275 - 285°C compoundiert.

Im Brandtest nach UL zeigt das Produkt bei 3,2 und 1,6 mm Wandstärke V 2.

Im Glühdrahttest nach IEC 695-2-1 werden bei 1 und 2 mm Wandstärke 960°C und bei 3 mm Wandstärke 750°C erreicht.

## Vergleichsbeispiel 7

Wie in Beispiel 6 werden 60 Gew.-T1. Polyamid 6, 30 Gew.-T1. einer beschlichteten Glasfaser mit einem Durchmesser von ca. 10 μm sowie 10 Gew.-T1. Melamincyanurat compoundiert.

Der Brandtest nach UL ergibt V 2 für 3,2 und 1,6 mm Wandstärke.

Im Glühdrahttest werden 650°C für 1, 2 und 3 mm Wandstärke gefunden.

## Vergleichsbeispiel 8

Man compoundiert wie in Vergleichsbeispiel 7 70 Gew.-T1. Polyamid 6 und 30 Gew.-T1. beschlichtete Glasfaser ohne Zusatz von Brandschutzmittel.

Im UL-Test findet man bei 3,2 und 1,6 mm Wandstärke H.B.

Der Glühdrahttest ergibt 650°C für 1 und 2 mm Wandstärke und 750°C für 3 mm Wandstärke.

## Patentansprüche

1. Flammfest ausgerüstete, verstärkte Polyamidformmassen, die 3 - 25 Gew.-% Melamin oder Melamincyanurat und 5 - 45 Gew.-% ungeschliohtete Glasfasern enthalten.

2. Formmassen nach Anspruch 1, dadurch gekennzeichnet, daß Polyamid 66 oder Polyamid-6 eingesetzt wird.

3. Formmassen nach Anspruch 1 oder 2, dadurch gekennzeichnet, daß sie 5 - 20 Gew.-% Melamin oder Melamincyanurat und 10 - 4- Gew.-% ungeschlichtete Glasfasern eingesetzt sind.

## Claims

1. Flameproofed reinforced polyamide moulding compounds containing 3 to 25% by weight melamine or melamine cyanurate and 5 to 45% by weight unsized glass fibres.

2. Moulding compounds as claimed in claim 1, characterized in that polyamide-66 or polyamide-6 is used.

3. Moulding compounds as claimed in claim 1 or 2, characterized in that 5 to 20% by weight melamine or melamine cyanurate and 10 to 40% by weight unsized glass fibres are used.

## Revendications

1. Compositions à mouler à base de polyamides renforcées et rendues ignifuges, qui contiennent 3 à 25% en poids de mélamine ou de cyanurate de mélamine et 5 à 45% en poids de fibres de verre non ensimées.

2. Compositions à mouler suivant la revendication 1, caractérisées en ce qu'on utilise du Polyamide 66 ou du Polyamide 6.

3. Compositions à mouler suivant la revendication 1 ou 2, caractérisées en ce qu'on utilise 5 à 20% en poids de mélamine ou de cyanurate de mélamine et 10 à 40% en poids de fibres de verre non ensimées.